# EUROPEAN PATENT APPLICATION

(11) **EP 2 359 967 A1**
(43) Date of publication of application: **24.08.2011**
(21) Application number: 10425029.5
(22) Date of filing: 11.02.2010
(51) Int. Cl.: B23B 29/034

(54) **Tool for making an undercut and the like**

(71) Applicant: S.T.M. S.r.l., 20077 Melegnano (MI) (IT); VALTEC Wolkersdorf GmbH, 3360 Herzogenbuchsee (CH)
(72) Inventor: Cambiaghi, Matteo, 20077 Melegnano (Milano) (IT); Wolkersdorf, Claus, 3360 Herzogenbuchsee (CH)
(74) Representative: Lunati & Mazzoni S.r.L.

(57) **Abstract**

It is disclosed a tool (1) for making an undercut and the like comprising a casing (5) adapted to at least partly house the components constituting the tool (1), a shaft (2) having a central axis (2a) and being adapted to translate relative to the casing (5) in a direction substantially parallel to the axis (2a), at least one slide (3) suitable to house at least one bit (3b) and to translate along a sliding plane (3a) perpendicular to the central axis (2a) and at least one lever (4) connected to the casing (5) and susceptible of rotation relative thereto around a rotation axis (4a) suitably spaced apart from the central axis (2a) and substantially parallel to the sliding plane (3a), which lever is adapted to connect the translation of the shaft (2) to that of the slide (3).

## Description

The present invention relates to a tool for making an undercut and the like, such as a groove or a cut-out, of the type pointed out in the preamble of claim 1.

It is known that presently, workings by removal of chips are contemplated for almost the whole of the products made of metal materials and not, above all as the final step of the production process.

These workings are carried out by tools adapted to remove the excess material in the form of chips from the workpiece. To this aim, the workpieces are suitably disposed on appropriate machine tools.

In some machine tools the workpiece is provided to be set in rotation while the tool carries out a translation during working. In other machine tools it is the workpiece to remain stationary, while the tool is provided both with a rotational motion around its own axis and with a translational motion required for carrying out the working.

Therefore, with these machine tools it is possible to make almost any type of workings. In addition, by varying the cutting parameters, such as the feeding speed and the rotation speed, it is possible to modify the obtained surface finish while the working geometry depends on the tool.

The most important parts of a tool are the shank, i.e. the tool portion adapted to enable fastening of the tool to the machine tool, and the body that will define the structure for supporting and housing the cutting insert or bit constituting the blade, i.e. the tool portion carrying out removal of the material and therefore the working.

In addition, tools are distinguishable based on the number of bits, i.e. the cutting surfaces; for instance, those with a single bit are defined as monoedge tools. Presently there are different types of tools enabling a wide variety of workings to be carried out. In spite of that, some workings such as undercuts, grooves, inner grooves or similar workings are still difficult, due to the particular geometry of same.

In fact, in these workings the cutting edge, i.e. the edge of the bit designed to carry out the cut, is required to be placed externally of the body enabling creation of the undercut, i.e. the cavity of greater section than that of the opening into which the tool is introduced.

In particular, these tools are characterised by a central body, usually of cylindrical shape, with an extremity of greater section and on the outer surface of which one or more bits are secured, being rigidly connected to the central body.

Said tools, as they are not able to vary the position of the bits and in particular, since the distance between the bits and the rotation axis is fixed, are required to be moved, in a direction perpendicular to the rotation axis, with great complication of the machine tool which, as a result, gives rise to an increase in costs.

In order to solve the above problems, tools for undercuts have been made in which the bits are secured onto one or more slides adapted to translate along a plane perpendicular to the rotation axis.

This movement is usually obtained by a coupling between cogwheel and rack or by means of an inclined rod extending between part of the central body and the slide or yet by a more complicated kinematic mechanism.

In the first case each slide is provided with a rack that is coupled to a cogwheel rigidly connected to the body. The central body, through rotation, causes translation of the slide and, therefore, of the bit enabling the tool to create undercuts characterised by a greater depth.

In the second case the body is secured to a rod which is inclined to the rotation axis by a given angle, while the slide is constrained to slide under the impulse of said rod. The shaft, by its translation parallel to the rotation axis, moves the rod along an inclined trajectory and therefore enables the slide and the bit to vary the position relative to the rotation axis.

The known art mentioned above has some important drawbacks.

Feeding by means of a coupling between cogwheel and rack is not perfectly continuous but it takes place by small steps, so that it is difficult to make precise workings both in terms of geometry and surface appearance.

In addition, this feeding by steps causes sudden voltage changes on the tool that can bring to breaking of same.

Finally said coupling has high backlashes causing further decay in the obtainable level of accuracy.

The second known system does not allow a high working quality and also a good reliability to be reached.

In addition, said system enables limited displacements of the slide and therefore only undercuts of limited depth can be made.

Said limitation is due to the rod having an inclination angle not exceeding 30° so that a maximum ratio between the shaft advancing movement and the slide advancing movement equal to 0.8 is allowed.

Greater values cannot be obtained due to the stresses present during working that would cause breaking of the tool.

Therefore these tools are able to offer a limited range of obtainable depths, i.e. a small gap between the minimum and maximum depths.

Finally, the described tools are characterised by a poor reliability and high costs.

Under this situation, the technical task underlying the present invention is to devise a tool for making an undercut and the like capable of substantially obviating the mentioned drawbacks.

Within the scope of this technical task, it is an important aim of the invention to devise a tool adapted to make workings characterised by a high geometrical and surface accuracy.

Another important aim of the invention is to enable the distance between the bits to be varied in a continuous manner thus ensuring a high accuracy and quality of the undercut thus made.

A further aim of the invention is to make a tool capable of having a wider range of depths to be obtained, sizes being the same.

Not least among the invention aims is to make a reliable tool having a reduced cost.

The technical task mentioned and the aims specified are achieved by a tool for making an undercut and the like as claimed in the appended Claim 1.

Preferred embodiments are highlighted in the sub-claims.

The features and advantages of the invention are clarified hereinafter by the detailed description of a preferred embodiment of the invention, with reference to the accompanying drawings, in which:
**Fig. 1a** shows a section of a first configuration of the tool;
**Fig. 1b** is a section of a second configuration of the tool;
**Fig. 1c** shows a further section of the second configuration of the tool;

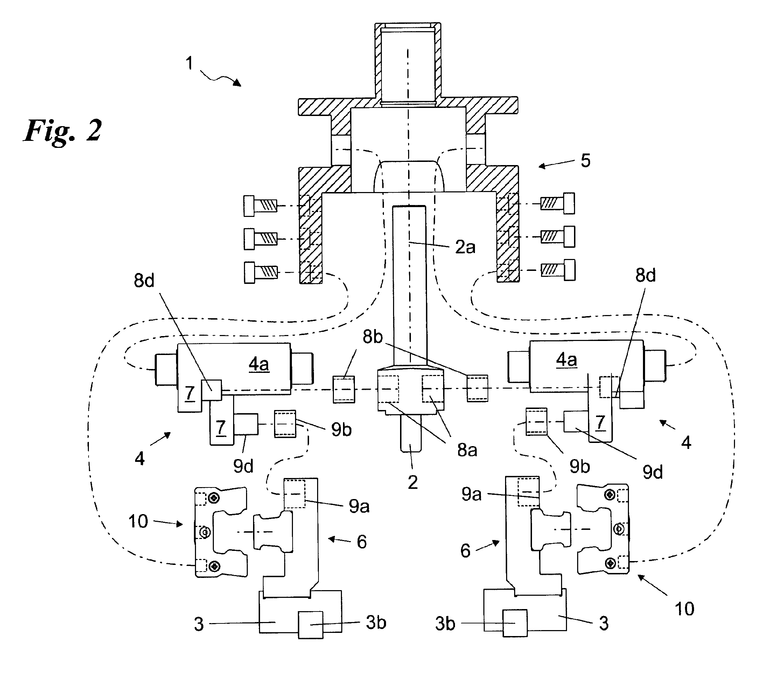

**Fig. 2a** is an exploded view of the tool;
**Fig. 3a** is a view of a first component of the tool;
**Fig. 3b** shows a second view of the first component;
**Fig. 4a** is a view of a second component of the tool; and
**Fig. 4b** shows a second view of the second component.

With reference to the accompanying drawings, the tool in accordance with the invention is generally identified by reference numeral **1.**

It is adapted to be mounted on machine tools for internal or external workings. The same is therefore able to work the outer surface or inner surface of a possible cavity present in the workpiece.

Tool 1 is able to make a multiplicity of operations for chip removal, such as to form grooves, undercuts and facets, by varying its position relative to that of the workpiece.

Finally, tool 1 can be used on different types of machine tools **11,** i.e. both those adapted to carry out workings by chip removal driving the tool 1 in rotation, and those driving the workpiece in rotation. Preferably, it is disposed on machine tools 11 falling within the first type of machine described above.

These machines 11 are further suitably provided with a spindle **11a,** adapted to secure the tool 1 and drive said tool 1 in rotation around a rotation axis, and a pulling bar **11b** suitable to translate along said rotation axis or central axis of spindle 11 a.

Tool 1 briefly comprises a casing **5** adapted to at least partly house the different components constituting tool 1, a shaft **2** provided with a central axis **2a** and susceptible of translation relative to casing 5 in a direction substantially parallel to said axis 2a, at least one slide **3,** adapted to translate along a sliding plane **3a** perpendicular to the axis 2a and comprising at least one cutting insert or bit **3b,** and at least one lever **4,** adapted to allow the shaft 2 to operate translation of slide 3.

In addition, casing 5 is provided with an attachment enabling tool 1 to be secured to the machine tool 11 in such a manner that the axis 2a is substantially coincident with the rotation axis of the spindle.

Shaft 2 is adapted to be secured to said pulling bar 11b which operates translation of shaft 2 along axis 2a relative to the casing 5.

Finally, shaft 2 is advantageously hollow to enable a feeding system suitably connected to an end of shaft 2, to cause a refrigerating or lubricating fluid such as air or a water-oil emulsion for example, to reach the work region. Preferably, the fluid reaches the work region through bar 11 b, passing then through shaft 2. Slide 3 comprises a base body on which at least one cutting insert or bit 3b is housed, said bit carrying out the working by removal of the excess material. In particular, said bit is disposed in such a manner that its blade, i.e. the surface adapted to carry out the working, is alternately located in the vicinity of either the slide face that is the closest to the central axis 2a, or the face that is the farthest therefrom.

Finally, the bit 3b is preferably secured to slide 3 in a releasable manner by means of screws or the like, so as to enable quick replacement of same. Slide 3 is rigidly connected to a carriage 6 suitable to guide said slide along the sliding plane 3a, through releasable connecting means. Alternatively, carriage 6 and slide 3 are made as a one-piece element.

Disposed between the carriage 6 and shaft 7 is at least one lever 4 adapted to enable motion transmission between said components.

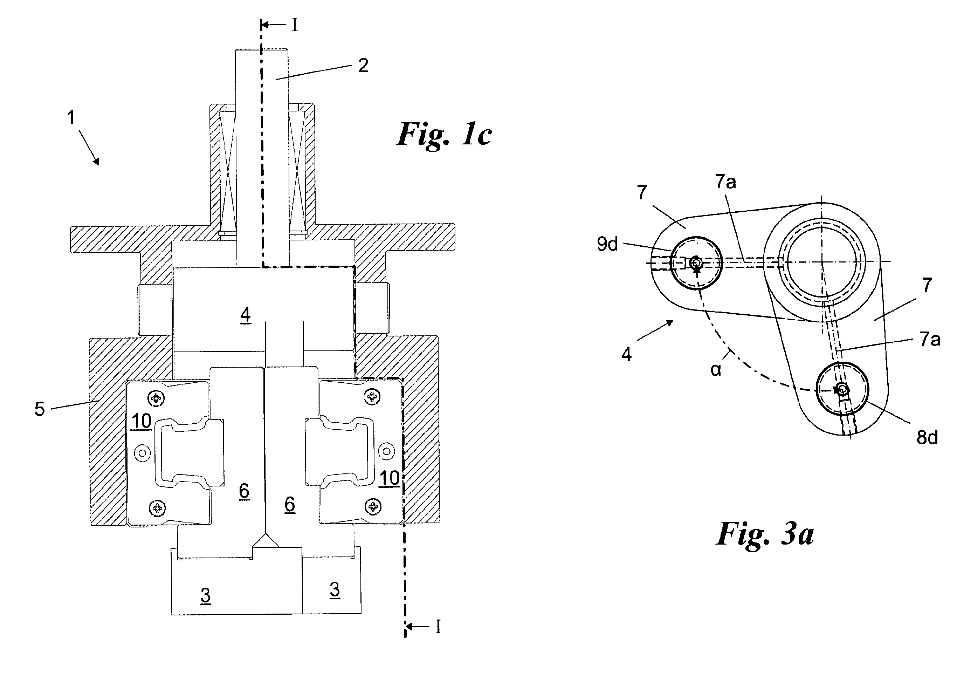

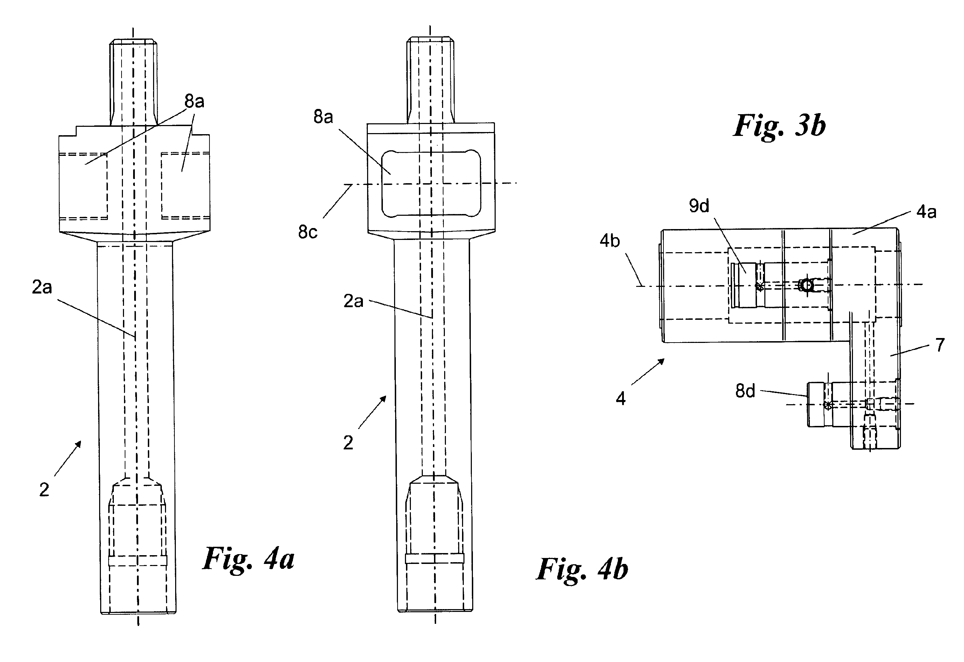

Lever 4, as shown in Figs. 3a, 3b, comprises a central body 4a and at least preferably two tongues 7 which preferably are of same length; in addition, each of the two tongues 7 has such a shape as to define a major extension direction 7a.

The central body **4a** is suitably made of a cylindrical shape and housed in appropriate cavities inside casing 5, so as to define a rotation axis **4b** of lever 4 that is substantially parallel to the sliding plane 3a.

The two tongues 7 are positioned over each other in such a manner that the two directions 7a are inclined relative to each other by an opening angle α as shown in Fig. 3a. This angle α together with the length of tongues 7 determines the ratio between the advancing movement of shaft 2 and that of slide 3.

In particular, this angle α is such selected that the maximum value of said ratio is obtained, which value is suitably included between 0.85 and 1.15. Preferably, this ratio is equal to 1.

It is important to point out that the ratio between the advancing movement of shaft 2 and that of slide 3 is substantially constant during the displacement of shaft 2. Angle α is therefore included between 60° and 130°, preferably included between 90° and 110° and more preferably between 98° and 100°.

Advantageously, tongues 7 are made as a one-piece element and preferably have major extension directions 6a lying in a single plane.

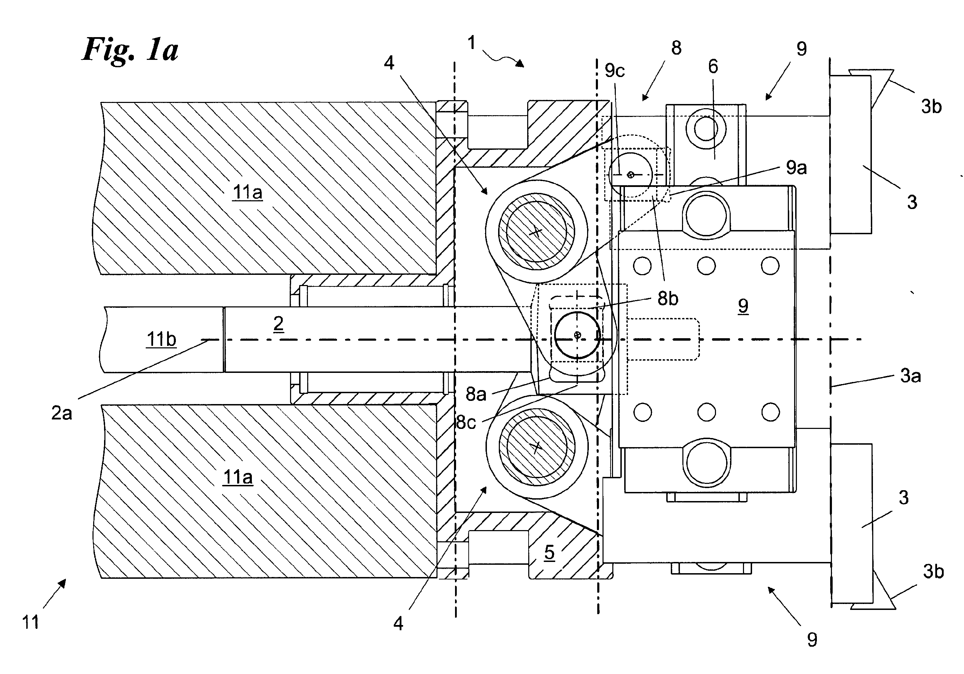

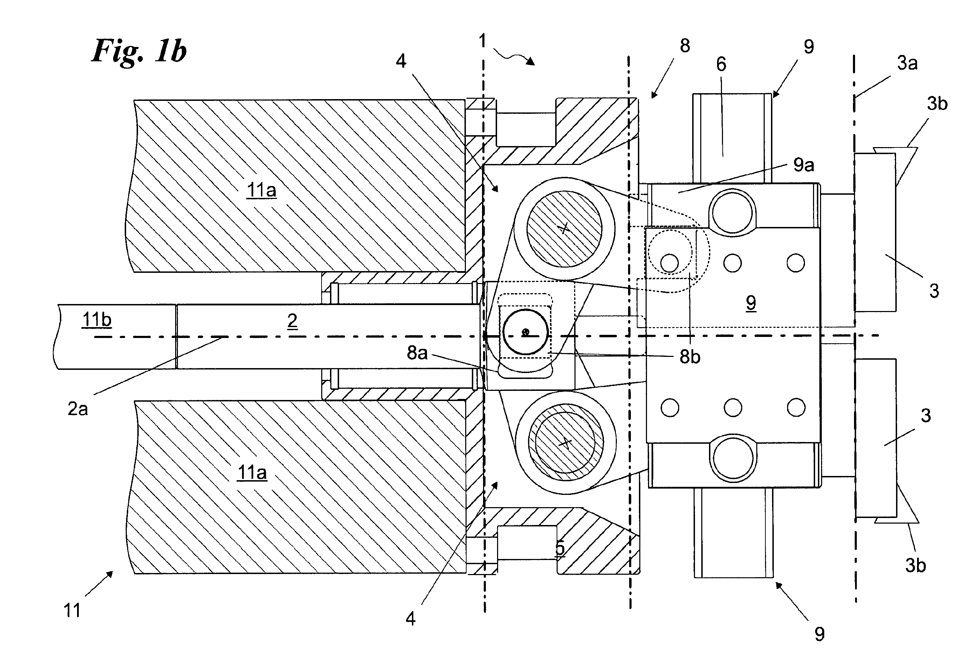

Finally, tool 1 can be provided with two levers 4 which are preferably disposed in a symmetric position relative to the central axis 2a and whose rotation axes 4b are substantially parallel to each other and spaced apart the same distance from said central axis 2a, as shown in Figs. 1 a and 1 b.

In addition, sizes and positioning of levers 4 is of such a nature that the advancing movement of shaft 2 causes the two slides 3 to carry out a sliding movement that is substantially identical in both of them and is the same as that of the shaft. In addition, displacement of slides 3 takes place in two directions almost parallel to each other, but of opposite way.

The motion transmission from shaft 2 to each of slides 3 can be obtained due to at least two kinematic mechanisms connecting lever 4, and in particular tongues 7, both to shaft 2 and carriage 6. In particular, these kinematic mechanisms are adapted to convert the translation motion of shaft 2, parallel to axis 2a, into a rotation motion of lever 4, which motion in turn is converted into sliding of carriage 6, and therefore of slide 3, along the sliding plane 3a.

Preferably, the kinematic mechanisms are two in number and allow the occurrence of an output motion, that of slide 3, perpendicular to an input motion, that of shaft 2; the first of said kinematic mechanisms 8 is adapted to connect shaft 2 to lever 4, while the second kinematic mechanism 9 connects lever 4 to carriage 6 and slide 3.

Both the kinematic mechanisms 8 and 9 advantageously comprise a seat **8a** and **9a** preferably of prismatic shape and formed in shaft 2 and carriage 6 respectively, and a sliding element **8b** and **9b.**

In the first kinematic mechanism 8 the seat 8a, formed along the outer surface of shaft 2, advantageously extends in an extension direction **8c** substantially perpendicular to the central axis 2a.

In particular shaft 2, in the vicinity of the free end, has a section thickening adapted to enable formation of the seat 8a without reducing the strength of the shaft 2 itself.

Shown in Figs. 4a and 4b is the shaft in which two seats 8a are formed, each of them being adapted to be suitably connected to one of the two levers 4.

In the second kinematic mechanism 9 the extension direction **9c** of the seat 9a is substantially perpendicular to the sliding plane 3a and is formed in the lower portion of carriage 6, i.e. the closest surface to the rotation axis 4b

Housed within each of the two seats 8a and 9a is a sliding element 8b and 9b adapted to slide internally thereof in a manner substantially parallel to said extension directions 8c and 9c.

In addition, each sliding element 8b and 9b contemplates the presence of a seat in which a pin **8d** and **9d** is disposed, said pins being secured to one of the two tongues 7 in such a manner as to enable tongue 7, and therefore lever **4,** to carry out a rotation relative to the two elements 8b and 9b.

In conclusion, due to rotation of tongues 7 relative to the element 8b and translation of the element 8b along the direction 8c, the translation of shaft 2 **can** operate the rotation of lever 4. In the same manner, due to rotation of tongues 7 relative to the element 9b and translation of the element 9b along the direction 9c, the rotation of lever 4 can operate translation of shaft 6 and slide 3.

In particular, pins 8d and 9d and tongues 7 can be made as a one-piece element, as shown in Figs. 3a and 3b.

Finally, in order to make sliding of slide 3 more linear and avoid jumping of tip 3b, tool 1 can be provided with at least one guide **10** rigidly connected to the casing 5 and adapted to guide the movement of carriage 6 and therefore of slide 3, along the sliding plane 3a.

Operation of a tool for making undercuts and the like, described above as regards structure, is the following.

At the beginning, tool 1 and the workpiece are suitably disposed on the machine tool 11.

Tool 1 is secured to the machine 11, and in particular the casing is suitably connected to spindle 11 a, while shaft 2 is rigidly mounted on the pulling bar 11 b. At this point tool 1 is driven in rotation through spindle 11a.

Simultaneously, tool 1 actuates the two slides 3 and varies the distance between them so as to determine a variation in the working depth.

In particular, said bar 11 b provided with a sliding motion substantially coaxial with axis 2a, allows translation of shaft 2 along said axis 2a and, therefore, thanks to lever 4 and the kinematic mechanisms 8 and 9, enables slide 3 to slide along the sliding plane 3a.

In greater detail, translation of shaft 2 causes operation of element 8b that, in turn, gives rise to rotation of lever 4 around the axis 4b.

This rotation then moves the element 9b within the seat 9a, said element 9b causing rotation of carriage 6 and slide 3 in a direction parallel to the sliding plane 3a.

The invention achieves important advantages.

In fact, tool 1 allows the cutting depth to be varied in a continuous manner, therefore enabling the stresses acting on the tool to be controlled in an optimal manner, thereby improving reliability and durability of the tool itself.

In addition, due to the greater control exerted on slide 3, the cutting parameters can be adjusted more easily and therefore workings of better quality can be obtained.

Furthermore, the possibility of having a unitary ratio between the advancing movement of shaft 2 and that of slide 3 allows achievement of a tool 1 characterised by a greater working range, the tool bulkiness being the same. Moreover, tool 1 is of more reduced cost and ensures a longer lifetime as compared with the prior art tools. All of the details can be replaced by equivalent elements and the materials, shapes and sizes can be of any nature and magnitude.

## Claims

1. A tool (1) for making an undercut and the like, comprising: a casing (5) adapted to at least partly house the components constituting said tool (1), a shaft (2) having a central axis (2a) and being suitable to translate relative to said casing (5) in a direction substantially parallel to said axis (2a); and at least one slide (3) adapted to house at least one cutting insert or bit (3b) and to translate along a sliding plane (3a) perpendicular to said central axis (2a) and **characterised in that** it comprises at least one lever (4) connected to said casing (5) susceptible of rotation relative to said casing (5) around a rotation axis (4a) spaced apart from said central axis (2a) and substantially parallel to said sliding plane (3a), said lever being suitable to connect the translation of said shaft (2) to the translation of said slide (3).

2. A tool (1) as claimed in claim 1, wherein said lever (4) comprises at least two tongues (7) having two major extension directions (7a) inclined to each other by an opening angle (α) included between 60° and 130°.

3. A tool (1) as claimed in claim 2, wherein said opening angle (α) is such that it determines an advancing ratio between said shaft (2) and slide (3) included between 0.85 and 1.15.

4. A tool (1) as claimed in claim 3, wherein said advancing ratio between said shaft (2) and slide (3) is substantially equal to 1.

5. A tool (1) as claimed in one or more of the preceding claims, wherein said tongues (7) are made as a one-piece element.

6. A tool (1) as claimed in one or more of the preceding claims, comprising a first kinematic mechanism (8) adapted to convert said translation motion of said shaft (2) into said rotation of said lever (4), and a second kinematic mechanism (9) adapted to convert said rotation of said lever (4) into said sliding motion of said carriage (3).

7. A tool (1) as claimed in claim 6, wherein each of said first (8) and second (9) kinematic mechanisms each comprise an element (8b, 9b) suitable for translation in appropriate seats (8a, 9a) formed in said shaft (2) and said carriage (6) respectively, and a pin (8d, 9d) connected to one of said elements (8b, 9b) and one of said tongues (7) and adapted to enable a relative rotation motion between said element (8b, 9b) and said lever (4).

8. A tool (1) as claimed in claim 7, wherein said elements (8b, 9b) are adapted to slide within said seats (8a, 9a) in two directions that are substantially parallel to each other.

9. A tool (1) as claimed in claim 7, wherein said pins (8d, 9d) and tongue (7) are made as a one-piece element.

10. A tool (1) as claimed in one or more of the claims, wherein said levers (4) are two in number and have said rotation axes (4b) parallel to each other and spaced apart the same distance from said central axis (2a).

11. A tool (1) as claimed in one or more of the claims, wherein said slides (3) are two in number.

12. A tool (1) as claimed in claims 10 and 11, wherein the advancing movement of said shaft (2) causes two displacements of said two slides (3) that are substantially coincident with each other.

13. A tool (1) as claimed in one or more of the preceding claims, comprising a guide (10) rigidly connected to said casing (2), on which said carriage (6) slides ensuring an almost rectilinear motion to said slide (3).

14. A tool (1) as claimed in one or more of the preceding claims, wherein said slide (3) and carriage (6) are made as a one-piece element.

15. A tool (1) as claimed in one or more of the preceding claims, adapted to be mounted on machine tools contemplating setting in rotation of said tool (11).
